# EUROPÄISCHE PATENTSCHRIFT

(11) **EP 1 959 181 B1**
(45) Veröffentlichungstag und Bekanntmachung des Hinweises auf die Patenterteilung: **18.11.2009**
(21) Anmeldenummer: 08100259.4
(22) Anmeldetag: 09.01.2008
(51) Int. Cl.: F16L 37/091, F16L 19/08, F16L 13/14

(54) **Fitting und Verbindungsanordnung mit einem Fitting**
Fitting and connection assembly with a fitting
Raccord et ensemble de connexion avec un raccord

(30) Priorität: 15.02.2007 DE 102007008066
(43) Veröffentlichungstag der Anmeldung: 20.08.2008
(73) Patentinhaber: VIEGA GmbH & Co. KG, 57439 Attendorn (DE)
(72) Erfinder: Schreckenberg, Christoph, 57439 Attendorn (DE); Wasserhövel, Thorsten, 59757 Arnsberg (DE)
(74) Vertreter: Cohausz & Florack

(56) Entgegenhaltungen:
- EP-A- 1 081 423
- EP-A- 1 219 883
- EP-A- 1 533 555
- WO-A-2004/015317
- DE-A1- 19 654 435
- DE-U1- 9 400 545
- SE-B- 402 813
- US-A- 4 362 323

## Beschreibung

Die vorliegende Erfindung betrifft einen Fitting, insbesondere für den Installationsbereich, zur Verbindung mit einem Ende einer von einem Medium durchströmbaren Rohrleitung, mit einem Verbindungsabschnitt, der eine umfänglich verlaufende Nut aufweist, in der ein Dichtelement angeordnet ist, wobei eine in axialer Richtung zwischen einer ersten Position und einer zweiten Position verschiebbare Schutzhülse vorgesehen ist, die in der ersten Position die Nut zumindest teilweise abdeckt und in der zweiten Position die Nut zumindest teilweise freigibt, wobei ein an der Schutzhülse ausgebildeter Anschlag mit einer Anschlagfläche vorgesehen ist, der derart mit dem Rohrleitungsende zusammenwirkt, dass eine Bewegung des Rohrleitungsendes relativ zum Verbindungsabschnitt auf die Schutzhülse übertragbar ist, wobei der Anschlag durch radiale Aufweitung bzw. Verengung eines Endes der Schutzhülse gebildet ist. Ferner betrifft die Erfindung eine Verbindungsanordnung, insbesondere für den Installationsbereich, mit einem Fitting und mit einem mit dem Fitting verbundenen Ende einer von einem Medium durchströmbaren Rohrleitung. Schließlich betrifft die Erfindung ein Verfahren zur Herstellung einer Verbindungsanordnung, insbesondere für den Installationsbereich, wobei ein Fitting mit einem Verbindungsabschnitt bereitgestellt wird, der eine umfänglich verlaufende Nut aufweist, und wobei ein Dichtelement in der Nut angeordnet wird, wobei eine Schutzhülse in einer ersten Position am Verbindungsabschnitt angeordnet wird, die die Nut zumindest teilweise abdeckt, und ein Ende einer Rohrleitung auf bzw. in den Verbindungsabschnitt geschoben wird, wobei die Schutzhülse in axialer Richtung in eine zweite Position verschoben wird, in der die Nut zumindest teilweise freigegeben wird.

In der Regel wird bei einer Verbindungsanordnung der zuvor beschriebenen Art das Rohrleitungsende in axialer Richtung über den Verbindungsabschnitt und das in der Nut befindliche Dichtelement geschoben. Währenddessen oder anschließend wird das Rohrleitungsende gegen unbeabsichtigtes Herausziehen axial fixiert. Dazu wird beispielsweise ein Schneidelement vorgesehen, das in die Wandung des Rohrleitungsendes einschneidet. Letzteres ist üblich bei einer Steckverbindung, bei der das Rohrleitungsende lediglich auf bzw. in den Fitting gesteckt wird und dabei automatisch axial fixiert wird. Es ist aber auch denkbar, das auf bzw. in den Fitting geschobene Rohrleitungsende mittels einer Pressverbindung, bei der eine Presshülse in einem Presswerkzeug zusammengedrückt wird, gegen axiales Herausschieben zu sichern.

Problematisch ist allerdings in beiden Fällen, dass beim Aufschieben des Rohrleitungsendes auf den Verbindungsabschnitt des Fittings das Dichtelement, welches in der Regel teilweise aus der Nut herausragt, verletzt oder zerstört wird. Auch kann das Dichtelement beim Aufschieben des Rohrleitungsendes aus der Nut herausgedrückt werden. Die Folge sind Undichtigkeiten im System.

Aus der EP 1 219 883 A1 ist es daher bekannt, eine in axiale Richtung zwischen einer ersten Position und einer zweiten Position verschiebbare Schutzhülse vorzusehen, die in der ersten Position die Nut zumindest teilweise abdeckt und in der zweiten Position die Nut zumindest teilweise freigibt. Wird das Rohrleitungsende auf den Fitting aufgeschoben, so wird es gleichzeitig auch bis zu einer Anschlagfläche auf die Schutzhülse aufgeschoben und bewegt diese weiter von der ersten Position in die zweite Position, so dass das Rohrleitungsende den Dichtring nicht verletzen oder zerstören kann. Als axiale Sicherung des Rohrleitungsendes im aufgeschobenen Zustand dient ein hakenförmiges Schneidelement, welches innenseitig in einer hülsenförmigen Kappe angeordnet ist, die den Verbindungsabschnitt mit der Nut und dem Dichtelement in einem vorbestimmten Abstand umgibt. Die Verbindung zwischen Rohrleitungsende und Fitting kann sich aber im Laufe der Zeit lockern.

Ähnliche Fittinge mit einer Schutzhülse, die einen Anschlag mit einer mit dem Rohrleitungsende zusammenwirkenden Anschlagfläche aufweisen, sind aus der EP 1 533 555 A1, der EP 1 081 423 A1, der SE 402 813 B, der DE 94 00 545 U1, der WO 2004/015317 A2 sowie der US 4,362,323 A bekannt. Auch hier kann sich die Verbindung zwischen Rohrleitungsende und Fitting im Laufe der Zeit lockern.

Es ist daher die Aufgabe der vorliegenden Erfindung, einen Fitting, eine entsprechende Verbindungsanordnung und ein entsprechendes Herstellungsverfahren für eine Verbindungsanordnung bereitzustellen, womit auch langfristig eine sichere Verbindung zwischen Rohrleitung und Fitting gewährleistet ist.

Die zuvor hergeleitete und aufgezeigte Aufgabe wird gemäß einer ersten Lehre der vorliegenden Erfindung bei einem Fitting der zuvor beschriebenen Art dadurch gelöst, dass die mit dem Rohrleitungsende zusammenwirkende Anschlagfläche des Anschlags der Schutzhülse einen zumindest abschnittsweise konischen oder einen im Querschnitt gebogenen Verlauf hat.

Ferner wird die Aufgabe gemäß einer zweiten Lehre der vorliegenden Erfindung durch eine entsprechende Verbindungsanordnung mit einem solchen Fitting gelöst.

Schließlich wird die Aufgabe gemäß einer dritten Lehre der vorliegenden Erfindung durch ein entsprechendes Verfahren zur Herstellung einer Verbindungsanordnung gelöst, bei dem bei der fertigen Verbindungsanordnung eine Verklemmung der Rohrleitung im Fitting hervorgerufen wird, indem das Rohrleitungsende mit einer Anschlagfläche eines Anschlags der Schutzhülse zusammenwirkt, der einen zumindest abschnittsweise konischen oder im Querschnitt gebogenen Verlauf hat.

Vorteilhafte Ausgestaltungen sind Gegenstand der Unteransprüche und werden im Folgenden näher beschrieben.

Erfindungsgemäß kann die Nut sowohl im Innern des Verbindungsabschnitts als auch außen am Verbindungsabschnitt umlaufend angeordnet sein. Entsprechend kann die Schutzhülse im Innern des Verbindungsabschnitts oder außen am Verbindungsabschnitt angeordnet sein.

Bei dem erfindungsgemäßen Fitting, der beispielsweise aus Kunststoff oder Metall hergestellt sein kann, ist vorzugsweise vorgesehen, dass in der ersten Position das Dichtelement vollständig abgedeckt ist. Ferner kann vorgesehen sein, dass in der ersten Position die Nut vollständig abgedeckt ist. Mit vollständig abgedeckt ist im vorliegenden Zustand eine Überdeckung zumindest in radialer Richtung gemeint.

Der Vorteil ist, dass bei einer zumindest teilweisen Abdeckung das Dichtelement beim Auf- bzw. Einschieben des Rohres vor Verletzung, Zerstörung oder Verschieben geschützt wird, da das stirnseitige Ende des Rohres mit dem Dichtelement nicht in Berührung kommt. Vielmehr wird das Dichtelement erfindungsgemäß beim Auf- bzw. Einschieben des Rohrleitungsendes erst dann freigegeben, wenn die Stirnseite des Rohrleitungsendes das Dichtelement in der Nut in axialer Richtung passiert hat. Durch das Auf- bzw. Einschieben des Rohrleitungsendes wird nämlich das Rohr zunächst auf die Schutzhülse aufgeschoben, wobei die Bewegung des Rohrleitungsendes auf die Schutzhülse übertragen wird, so dass das stirnseitige Ende der Rohrleitung von dem Dichtelement beabstandet über dieses hinweggeführt wird. Nach einer gewissen axialen Verschiebung der Schutzhülse wird das Dichtelement dann freigegeben und kommt in abdichtenden Kontakt mit der Rohrleitungswandung.

Ein weiterer Vorteil des Abdeckens der Nut bzw. des Dichtelements, insbesondere wenn es sich um eine vollständige Abdeckung handelt, ist auch ein verbesserter Schutz vor Verschmutzung. So kann es bei der Lagerung von Fittingen und insbesondere bei deren Handhabung auf Baustellen dazu kommen, dass Schmutzpartikel in die Nut des Verbindungsabschnitts eindringen. Solche Schmutzpartikel führen beim Stand der Technik zu einem erhöhten Risiko von Undichtigkeiten. Dies wird erfindungsgemäß durch das Abdecken der Nut bzw. des Dichtelements verhindert.

Wie vorangehend beschrieben, wird beim Auf- bzw. Einschieben des Rohrleitungsendes in der zweiten Position die Nut zumindest teilweise freigegeben, vorzugsweise gerade so weit, dass das Dichtelement sich entspannt und mit dem Rohrleitungsende in abdichtenden Kontakt kommt. Eine besonders effektive Abdichtung wird insbesondere dann erreicht, wenn in der zweiten Position das Dichtelement vollständig freigegeben ist. Dabei kann die Nut in der zweiten Position ebenfalls vollständig freigegeben sein. Auf diese Weise wird eine optimale Anlage des Dichtelements, bei dem es sich um einen Dichtungsring, insbesondere einen O-Ring, handeln kann, an der Wandung der Rohrleitung ermöglicht.

Bei dem erfindungsgemäßen Fitting weist die Schutzhülse einen Anschlag auf, der mit dem Rohrleitungsende derart zusammenwirkt, dass eine Bewegung des Rohrleitungsendes relativ zum Verbindungsabschnitt auf die Schutzhülse übertragbar ist. Auf diese Weise muss, sobald das Rohrleitungsende auf die Schutzhülse aufgeschoben ist, die Schutzhülse nicht von Hand in axialer Richtung in die zweite Position geschoben werden, sondern dies kann automatisch durch die bloße Bewegung des Rohrleitungsendes geschehen.

Der Anschlag ist durch radiale Aufweitung bzw. Verengung eines Endes der Schutzhülse in einem im Querschnitt gebogenen Verlauf gebildet. Gemäß einer Alternative ist die Schutzhülse zumindest abschnittsweise konisch ausgebildet. Auch kann die Schutzhülse insgesamt, das heißt über ihre gesamte Länge, einen konischen Verlauf haben. Ein Anschlag in Form einer radialen Aufweitung bzw. Verengung hat den Vorteil, dass das Auf- bzw. Einschieben der Schutzhülse in den Bereich des Verbindungsabschnitts, insbesondere wenn auf das Dichtelement ein gewisser Druck ausgeübt werden soll, vereinfacht wird. Ein radial aufgeweitetes bzw. verengtes Ende oder ein zumindest abschnittsweise konischer Verlauf der Schutzhülse hat ferner den Vorteil, dass bei der fertigen Verbindungsanordnung, also im Falle eines vollständig auf- bzw. eingeschobenen Rohrleitungsendes, eine Verklemmung des Rohres im Fitting hervorgerufen oder zumindest unterstützt wird.

Gemäß einer weiteren Ausgestaltung des erfindungsgemäßen Fittings ist die Schutzhülse zwischen der ersten Position und der zweiten Position durch eine translatorische Bewegung verschiebbar. Es ist auch denkbar, dass zusätzlich eine rotatorische Bewegung erforderlich ist, um die Schutzhülse von der ersten in die zweite Position zu verschieben.

Bei dem erfindungsgemäßen Fitting ist gemäß einer weiteren Ausgestaltung eine Sicherung der Schutzhülse gegen unbeabsichtigtes Verschieben vorgesehen. Mit anderen Worten, bei der Handhabung des Fittings, beispielsweise bei seiner Herstellung oder später auf der Baustelle, wird vermieden, dass das Dichtelement oder die Nut im Verbindungsabschnitt des Fittings unbeabsichtigt freigegeben und schädlichen Umgebungseinflüssen ausgesetzt werden. Auch kann eine Sicherung ein unbeabsichtigtes Verlieren der Schutzhülse verhindern. Eine Sicherung ist beispielsweise möglich, indem die Schutzhülse unter Spannung, beispielsweise mit einem leichten Presssitz, auf den Verbindungsabschnitt aufgebracht bzw. in diesen eingebracht ist. Es ist auch denkbar, die Schutzhülse aufzuschrumpfen. Eine weitere Möglichkeit zur Sicherung gegen unbeabsichtigtes Verschieben ist, dass der Reibungswiderstand zwischen Schutzhülse und Verbindungsabschnitt erhöht ist. Mit anderen Worten, der Reibungswiderstand lässt ein Verschieben der Schutzhülse nur unter einem vorbestimmten Druck in axialer Richtung zu. Um den Reibungswiderstand gegenüber der ursprünglichen Oberfläche oder gegenüber anderen Oberflächenabschnitten des Fittings zu erhöhen, kann beispielsweise die Oberfläche der Schutzhülse und/oder des Verbindungsabschnitts zumindest abschnittsweise aufgeraut oder mit einem axialen Anschlag, vorzugsweise an dem dem Rohrleitungsende zugewandten Ende, versehen werden.

Gemäß noch einer weiteren Ausgestaltung des erfindungsgemäßen Fittings ist das Dichtelement durch die Schutzhülse in der ersten Position in radialer Richtung komprimierbar. Es ist auch denkbar, dass das Dichtelement durch Verschieben der Schutzhülse in die erste und/oder die zweite Position komprimierbar ist. Bei letzterer Variante weist die Schutzhülse insbesondere einen Abschnitt auf, der in der ersten Position in radialer Richtung über dem Dichtelement angeordnet ist und so ausgebildet ist, dass das Dichtelement weniger komprimiert ist als in einer anderen Position. Auf diese Weise ist gewährleistet, dass zumindest beim Auf- bzw. Einschieben des Rohrleitungsendes und dem daraufhin erfolgenden Verschieben der Schutzhülse das Dichtelement so weit in die Nut gedrückt wird, dass es von dem Rohrleitungsende nicht verletzt oder zerstört werden kann. Vor dem Auf- bzw. Einschieben des Rohres ist es jedoch nicht zwingend erforderlich, dass das Dichtelement dauerhaft verformt gehalten wird. Im Gegenteil, wenn das Dichtelement, obwohl es abgedeckt ist, dennoch entspannt oder zumindest teilweise entspannt ist, erhöht dies deutlich die Lebensdauer des Dichtelements.

Der Abschnitt der Schutzhülse, der ein zumindest teilweises Entspannen des Dichtelements in dem Zustand, in welchem das Rohr noch nicht auf- bzw. eingeschoben ist, bewirkt, kann beispielsweise flexibel ausgebildet sein. Es ist auch denkbar, einen oder mehrere Schlitze in diesem Abschnitt vorzusehen. Auch kann in dem Abschnitt eine Querschnittserweiterung bzw. -verengung vorgesehen sein. Diese kann konusförmig ausgebildet sein, wobei der Konus vorzugsweise gleichzeitig als Anschlag für das Rohrleitungsende dient. All diese Mittel ermöglichen, dass in dem noch nicht eingebauten Zustand das Dichtelement möglichst entlastet wird, dennoch aber zum Zeitpunkt des Auf- bzw. Einschiebens des Rohrleitungsendes vor selbigem geschützt ist.

Der Fitting weist gemäß einer weiteren Ausgestaltung eine hülsenförmige Kappe auf, die den Verbindungsabschnitt in einem vorbestimmten Abstand umgibt, wobei das Rohrleitungsende zwischen den Verbindungsabschnitt und der hülsenförmigen Kappe einschiebbar ist. Eine solche hülsenförmige Kappe dient einerseits als Führung des Rohrleitungsendes und ermöglicht andererseits auch die axiale Fixierung, beispielsweise durch ein Verklemmen. Die axiale Fixierung lässt sich insbesondere dadurch bewerkstelligen, dass die hülsenförmige Kappe innenseitig ein Schneidelement aufweist. Durch gleichzeitige Einwirkung des Anschlags an der Schutzhülse einerseits und des Schneidelements andererseits kann das Rohrleitungsende optimal im Fitting verklemmt werden.

Es ist ausdrücklich darauf hinzuweisen, dass die Schutzhülse sich zu dem Zeitpunkt, in welchem das Rohrleitungsende auf den Verbindungsabschnitt aufgeschoben wird, noch nicht zwingend in der ersten Position, in der also die Nut zumindest teilweise abgedeckt ist, befinden muss, sondern die Schutzhülse kann zu Beginn des Aufschiebens des Rohrleitungsendes auch, bezogen auf die Schieberichtung, vor der ersten Position, also vor der Nut, angeordnet sein, und erst durch das Verschieben des Rohrleitungsendes von dieser Anfangsposition in die erste Position gebracht werden. Es ist also nicht zwingend erforderlich, dass in dem Augenblick, in welchem damit begonnen wird, den Rohrleitungsabschnitt aufzuschieben, die Schutzhülse bereits in der ersten Position ist, sondern es muss nur gewährleistet sein, dass die Schutzhülse anfänglich in einer Position ist, die verhindert, dass das Rohrleitungsende mit dem Dichtelement in Kontakt kommt, wenn das Rohrleitungsende über die Nut geschoben wird. So ist es also gemäß wiederum einer weiteren Ausgestaltung des erfindungsgemäßen Fittings vorgesehen, dass die Schutzhülse durch Verschieben des Rohrleitungsendes in die erste Position und/oder in die zweite Position bringbar ist. Vorzugsweise ist aber bereits zu Beginn des Aufschiebevorgangs die Schutzhülse in der ersten Position und deckt die Nut und ggf. das Dichtelement bereits zumindest teilweise ab.

Es gibt nun eine Vielzahl von Möglichkeiten, den erfindungsgemäßen Fitting, die erfindungsgemäße Verbindungsanordnung sowie das erfindungsgemäße Verfahren auszugestalten und weiterzubilden. Hierzu wird beispielsweise verwiesen einerseits auf die dem Patentanspruch 1 nachgeordneten Patentansprüche, andererseits auf die Beschreibung eines Ausführungsbeispiels in Verbindung mit der Zeichnung. In der Zeichnung zeigt:
- Fig. 1: einen Fitting gemäß einem ersten Ausführungsbeispiel der vorliegenden Erfindung,
- Fig. 2a): ein Ausführungsbeispiel für eine Schutzhülse für den Fitting aus Fig. 1,
- Fig. 2b): ein Ausführungsbeispiel, das nicht Gegenstand der vorliegenden Erfindung ist,
- Fig. 3: eine Verbindungsanordnung mit dem Fitting aus Fig. 1, und
- Fig. 4a) und b): einen Fitting gemäß einem Ausführungsbeispiel, das ebenfalls nicht Gegenstand der vorliegenden Erfindung ist.

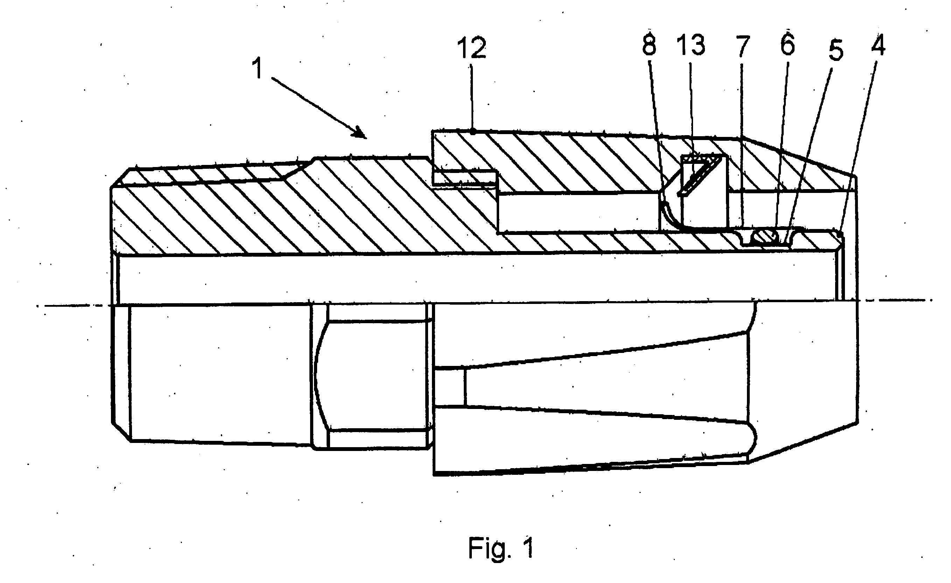

Fig. 1 zeigt in teilweise geschnittener Ansicht einen Fitting 1 aus Kunststoff zur Verbindung mit einem Ende 2 einer von einem Medium durchströmbaren Rohrleitung 3, wobei der Fitting 1 einen Verbindungsabschnitt 4 aufweist, der eine umfänglich verlaufende Nut 5 hat. In der Nut 5 ist als Dichtelement 6 ein O-Ring angeordnet.

Um den Verbindungsabschnitt 4 herum ist eine hülsenförmige Kappe 12 vorgesehen, die mit dem Fitting 1 fest verschraubt ist. Zwischen der hülsenförmigen Kappe 12 und dem Verbindungsabschnitt 4 des Fittings 1 ist ein ringförmiger Aufnahmeraum für das Ende 2 der Rohrleitung 3 ausgebildet.

Zum Schutz des Dichtelements 6 ist ferner eine Schutzhülse 7 vorgesehen, die im dargestellten Fall werksseitig vormontiert ist, aber auch nachträglich auf nahezu jeden beliebigen Fitting aufgesetzt werden kann.

Die Schutzhülse 7 ist in axialer Richtung zwischen einer ersten Position und einer zweiten Position verschiebbar, wobei im dargestellten Fall die Schutzhülse 7 in der ersten Position die Nut und das Dichtelement vollständig abdeckt und in der zweiten Position das Dichtelement vollständig freigibt. Fig. 1 zeigt die erste Position.

Das Ausführungsbeispiel einer Schutzhülse 7 in Fig. 1 weist einen zylindrischen Abschnitt und ein radial aufgeweitetes Ende auf. Der zylindrische Abschnitt ist in der in Fig. 1 dargestellten ersten Position in radialer Richtung über dem Dichtelement 6 angeordnet, und zwar derart, dass das Dichtelement 6 in der Nut 5 komprimiert ist.

Es sind allerdings auch Ausführungsbeispiele denkbar, bei denen die Schutzhülse 7 einen Abschnitt 9 aufweist, der in der ersten Position in radialer Richtung über dem Dichtelement 6 angeordnet ist und so ausgebildet ist, dass das Dichtelement 6 weniger komprimiert ist als im in Fig. 1 dargestellten Fall.

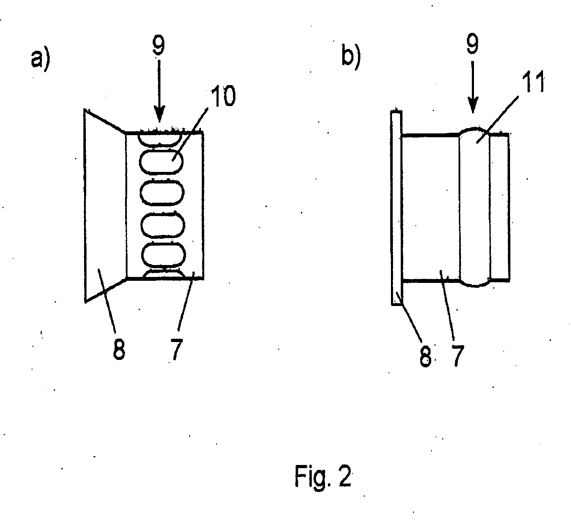

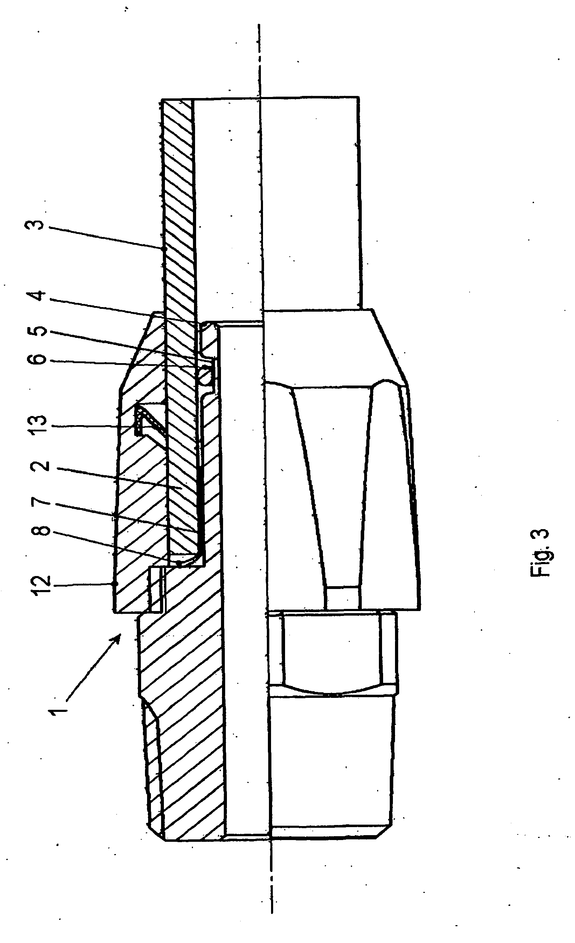

Gemäß Fig. 2a) kann der Abschnitt 9 beispielsweise mehrere Schlitze 10 aufweisen, die hier zu einer Materialschwächung führen und damit eine gewisse Entspannung des Dichtelements bewirken, solange der Abschnitt 9 in radialer Richtung über dem Dichtelement 6 angeordnet ist. Sobald dann die Schutzhülse 7 in die zweite Position verschoben wird, welche anhand von Fig. 3 noch näher erläutert wird, wird das Dichtelement 6 vorübergehend wieder so komprimiert, dass es vor dem Rohrleitungsende 2 geschützt ist.

Ein Ausführungsbeispiel einer Schutzhülse 7, welches nicht Gegenstand der vorliegenden Erfindung ist, ist in Fig. 2b) dargestellt. Hier ist im Abschnitt 9, der sich in der ersten Position in radialer Richtung über dem Dichtelement 6 befindet, eine Querschnittserweiterung 11 vorgesehen. Auch diese Querschnittserweiterung 11 bewirkt, dass das Dichtelement 6 beim Einschieben des Rohrleitungsendes 2 komprimiert wird, ansonsten aber im wesentlichen entspannt ist. Dies erhöht die Lebensdauer des Dichtelements 6.

Wie bereits anhand von Fig. 1 beschrieben, weist die Schutzhülse 7 ein radial aufgeweitetes Ende auf. Dieses Ende bildet einen Anschlag 8 für das stirnseitige Ende der Rohrleitung 3, so dass beim Herstellen einer Verbindungsanordnung 13, wie diese beispielhaft in Fig. 3 gezeigt ist, die Schutzhülse 7 automatisch von dem Rohrleitungsende 2 in Einschubrichtung des Rohrendes 2 in die zweite Position verschoben wird. In dieser zweiten Position ist die Nut 5 und das darin angeordnete Dichtelement 6 vollständig freigegeben, nämlich derart, dass sich das Dichtelement 6 entspannt und mit dem Rohrleitungsende 2, genau genommen seiner Innenseite, in abdichtenden Kontakt kommt.

Als Anschlag 8 kann die Schutzhülse 7 neben einer radialen Aufweitung in Bogenform, wie sie in Fig. 1 dargestellt ist, auch einen teilweise konischen Verlauf haben, wie er in Fig. 2a) dargestellt ist.

Fig. 3 zeigt die fertige Verbindungsanordnung 13, bei der das Rohrleitungsende 2 in den Fitting 1 eingeführt ist. Die Schutzhülse 7 bewirkt beim Einführen des Rohrleitungsendes 2, dass dieses zunächst in axialer Richtung auf die Schutzhülse 7 bis zum Anschlag 8 aufgeschoben wird, wobei anschließend die axiale Einschubbewegung des Rohrleitungsendes 2 über den Anschlag 8 auf die Schutzhülse 7 übertragen wird. Die Folge ist, dass bei weiterem Einführen des Rohrleitungsendes 2 in den Fitting 1 die Schutzhülse 7 von ihrer ursprünglichen ersten Position in besagte zweite Position verschoben wird, in der das Dichtelement 6 freigegeben wird. Dadurch entspannt sich das Dichtelement 6 und kommt mit dem Rohrleitungsende 2 in abdichtenden Kontakt, ohne dass das stirnseitige Ende des Rohrleitungsendes 2 beim Einschieben zu einer Beschädigung, Zerstörung oder einem Verschieben des Dichtelements 6 führen konnte.

Fig. 3 zeigt ferner, dass die hülsenförmige Kappe 12 innenseitig ein Schneidelement 13 aufweist, welches als axiale Fixierung gegen unbeabsichtigtes Herausziehen des Rohrleitungsendes 2 dient. Durch den aufgeweiteten Anschlag 8 einerseits und das Schneidelement 13 andererseits wird außerdem für eine optimale Verklemmung des Rohrendes 2 im Fitting 1 gesorgt.

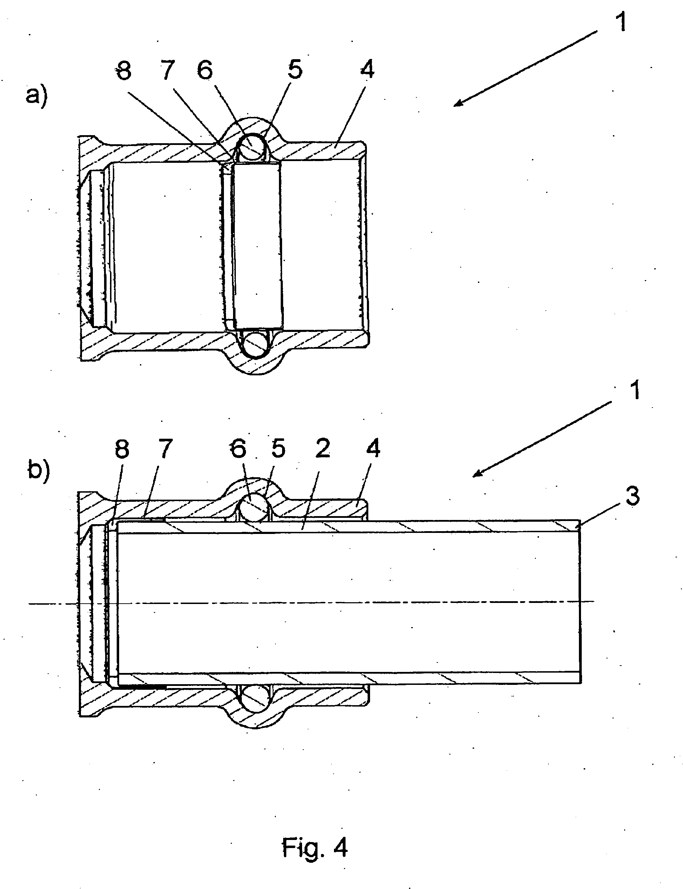

In Fig. 4a) ist ein Ausführungsbeispiel eines Fittings 1 dargestellt, das nicht Gegenstand der vorliegenden Erfindung ist, aber das Prinzip zeigt, bei dem im Unterschied zum ersten Ausführungsbeispiel in Fig. 1 die Nut 5 im Innern des Verbindungsabschnitts 4 umlaufend angeordnet ist. Der Fitting 1 dient ebenfalls zur Verbindung mit einem Ende 2 einer von einem Medium durchströmbaren Rohrleitung 3, wobei der Fitting 1 einen Verbindungsabschnitt 4 aufweist, der mit der umfänglich verlaufenden Nut 5 versehen ist. Auch in diesem Beispiel ist in der Nut 5 als Dichtelement 6 ein O-Ring angeordnet.

Entsprechend ist zum Schutz des Dichtelements 6 eine Schutzhülse 7 im vorliegenden Fall innenseitig angeordnet. Auch diese Schutzhülse 7 ist werksseitig vormontiert, kann aber auch nachträglich in nahezu jeden beliebigen Fitting eingesetzt werden.

Die Schutzhülse 7 ist in axialer Richtung zwischen einer ersten Position und einer zweiten Position verschiebbar, wobei beim Vergleich der Figuren 4a) und 4b) deutlich wird, dass die Schutzhülse 7 in der ersten Position die Nut 5 und das Dichtelement 6 vollständig abdeckt und in der zweiten Position vollständig freigibt. Fig. 4a) zeigt die erste Position, wohingegen Fig. 4b) die zweite Position zeigt.

Das Ausführungsbeispiel einer Schutzhülse 7 in Fig. 4a) und b), das nicht Gegenstand der vorliegenden Erfindung ist, weist einen zylindrischen Abschnitt sowie ein radial verengtes Ende in Form einer umlaufenden Schulter auf. Der zylindrische Abschnitt ist in der in Fig. 4a) dargestellten ersten Position in radialer Richtung über dem Dichtelement 6 angeordnet, und zwar derart, dass das Dichtelement 6 in der Nut 5 nicht komprimiert ist. Das in radialer Richtung verengte Ende der Schutzhülse 7 bildet einen Anschlag 8 für das stirnseitige Ende der in den Fitting 1 eingeschobenen Rohrleitung 3, so dass beim Herstellen einer Verbindungsanordnung 13, wie diese in Fig. 4b) dargestellt ist, die Schutzhülse 7 automatisch von dem Rohrleitungsende 2 in Einschubrichtung des Rohrendes 2 in die zweite Position verschoben wird. In dieser zweiten Position ist die Nut 5 und das darin angeordnete Dichtelement 6 vollständig freigegeben, nämlich derart, dass das Dichtelement 6 mit dem Rohrleitungsende 2, genau genommen mit seiner Außenseite, in abdichtenden Kontakt kommt, wenn der Fitting im Bereich der Nut 5 mittels eines Presswerkzeugs in radialer Richtung kaltverformt wird.

Fig. 4b) zeigt den Zustand nach Einschieben des Rohrleitungsendes 2 nach dem Verpressen mittels des Presswerkzeugs. Bei Vergleich der Fig. 4a) mit der Fig. 4b) erkennt man, dass erst nach dem Verpressen das Dichtelement 6 in abdichtenden Kontakt mit dem Rohrleitungsende 2 kommt. Im in Fig. 4a) dargestellten Zustand ist das Dichtelement 6 dagegen in radialer Richtung soweit zurückgesetzt angeordnet, dass es über die Nut 5 nach innen nicht hinausragt. In diesem Fall dient die Schutzhülse 7 zum optimalen Schutz des Dichtelements 6 vor schädigenden Umgebungseinflüssen, wie Schmutz, Wasser, UV-Strahlung, etc.

## Patentansprüche

1. Fitting (1), insbesondere für den Installationsbereich, zur Verbindung mit einem Ende (2) einer von einem Medium durchströmbaren Rohrleitung (3), mit einem Verbindungsabschnitt (4), der eine umfänglich verlaufende Nut (5) aufweist, in der ein Dichtelement (6) angeordnet ist,
wobei eine in axialer Richtung zwischen einer ersten Position und einer zweiten Position verschiebbare Schutzhülse (7) vorgesehen ist, die in der ersten Position die Nut (5) zumindest teilweise abdeckt und in der zweiten Position die Nut (5) zumindest teilweise freigibt, wobei ein an der Schutzhülse (7) ausgebildeter Anschlag (8) mit einer Anschlagfläche vorgesehen ist, der derart mit dem Rohrleitungsende (2) zusammenwirkt, dass eine Bewegung des Rohrleitungsendes (2) relativ zum Verbindungsabschnitt (4) auf die Schutzhülse (7) übertragbar ist, wobei der Anschlag (8) durch radiale Aufweitung bzw. Verengung eines Endes der Schutzhülse (7) gebildet ist,
**dadurch gekennzeichnet, dass** die mit dem Rohrleitungsende (2) zusammenwirkende Anschlagfläche des Anschlags (8) der Schutzhülse (7) einen zumindest abschnittsweise konischen Verlauf hat.

2. Fitting (1), insbesondere für den Installationsbereich, zur Verbindung mit einem Ende (2) einer von einem Medium durchströmbaren Rohrleitung (3), mit einem Verbindungsabschnitt (4), der eine umfänglich verlaufende Nut (5) aufweist, in der ein Dichtelement (6) angeordnet ist,
wobei eine in axialer Richtung zwischen einer ersten Position und einer zweiten Position verschiebbare Schutzhülse (7) vorgesehen ist, die in der ersten Position die Nut (5) zumindest teilweise abdeckt und in der zweiten Position die Nut (5) zumindest teilweise freigibt, wobei ein an der Schutzhülse (7) ausgebildeter Anschlag (8) mit einer Anschlagfläche vorgesehen ist, der derart mit dem Rohrleitungsende (2) zusammenwirkt, dass eine Bewegung des Rohrleitungsendes (2) relativ zum Verbindungsabschnitt (4) auf die Schutzhülse (7) übertragbar ist, wobei der Anschlag (8) durch radiale Aufweitung bzw. Verengung eines Endes der Schutzhülse (7) gebildet ist,
**dadurch gekennzeichnet, dass** die mit dem Rohrleitungsende (2) zusammenwirkende Anschlagfläche des Anschlags (8) der Schutzhülse (7) einen im Querschnitt gebogenen Verlauf hat.

3. Fitting (1) nach Anspruch 1 oder 2, **dadurch gekennzeichnet, dass** in der ersten Position das Dichtelement (6) vollständig abgedeckt ist.

4. Fitting (1) nach einem der vorangehenden Ansprüche, **dadurch gekennzeichnet, dass** in der ersten Position die Nut (5) vollständig abgedeckt ist.

5. Fitting (1) nach einem der vorangehenden Ansprüche, **dadurch gekennzeichnet, dass** in der zweiten Position das Dichtelement (6) vollständig freigegeben ist.

6. Fitting (1) nach einem der vorangehenden Ansprüche, **dadurch gekennzeichnet, dass** in der zweiten Position die Nut (5) vollständig freigegeben ist.

7. Fitting (1) nach einem der vorangehenden Ansprüche, **dadurch gekennzeichnet, dass** das Dichtelement (6) ein Dichtungsring, insbesondere ein O-Ring, ist.

8. Fitting (1) nach einem der vorangehenden Ansprüche, **dadurch gekennzeichnet, dass** der Anschlag (8) an der Schutzhülse (7) angeformt ist.

9. Fitting (1) nach einem der vorangehenden Ansprüche, **dadurch gekennzeichnet, dass** die Schutzhülse (7) zwischen der ersten Position und der zweiten Position durch eine translatorische Bewegung verschiebbar ist.

10. Fitting (1) nach Anspruch 9, **dadurch gekennzeichnet, dass** die Schutzhülse (7) zwischen der ersten Position und der zweiten Position durch eine rotatorische Bewegung verschiebbar ist.

11. Fitting (1) nach einem der vorangehenden Ansprüche, **dadurch gekennzeichnet, dass** eine Sicherung der Schutzhülse (7) gegen unbeabsichtigtes Verschieben vorgesehen ist.

12. Fitting (1) nach Anspruch 11, **dadurch gekennzeichnet, dass** die Schutzhülse (7) unter Spannung am Verbindungsabschnitt (4) angeordnet, insbesondere aufgeschrumpft, ist.

13. Fitting (1) nach Anspruch 11 oder 12, **dadurch gekennzeichnet, dass** die Schutzhülse (7) durch einen erhöhten Reibungswiderstand zwischen der Schutzhülse (7) und dem Verbindungsabschnitt (4) gesichert ist.

14. Fitting (1) nach einem der Ansprüche 11 bis 13, **dadurch gekennzeichnet, dass** die Oberfläche der Schutzhülse (7) und/oder des Verbindungsabschnitts (4) zumindest abschnittsweise aufgeraut oder mit einem axialen Anschlag, vorzugsweise an dem dem Rohrleitungsende (2) zugewandten Ende, versehen ist.

15. Fitting (1) nach einem der vorangehenden Ansprüche, **dadurch gekennzeichnet, dass** das Dichtelement (6) durch die Schutzhülse (7) in der ersten Position in radialer Richtung komprimierbar ist.

16. Fitting (1) nach einem der vorangehenden Ansprüche, **dadurch gekennzeichnet, dass** das Dichtelement (6) komprimierbar ist durch Verschieben der Schutzhülse (7) in die erste Position und/oder in die zweite Position.

17. Fitting (1) nach Anspruch 16, **dadurch gekennzeichnet, dass** die Schutzhülse (7) einen Abschnitt (9) aufweist, der in der ersten Position in radialer Richtung neben dem Dichtelement (6) angeordnet ist und so ausgebildet ist, dass das Dichtelement (6) weniger komprimiert ist als in einer anderen Position.

18. Fitting (1) nach Anspruch 17, **dadurch gekennzeichnet, dass** der Abschnitt (9) flexibel ist.

19. Fitting (1) nach Anspruch 17 oder 18, **dadurch gekennzeichnet, dass** der Abschnitt (9) einen oder mehrere Schlitze (10) aufweist.

20. Fitting (1) nach einem der Ansprüche 17 bis 19, **dadurch gekennzeichnet, dass** der Abschnitt (9) eine Querschnittserweiterung (11) bzw. -verengung aufweist, die insbesondere konusförmig ausgebildet ist.

21. Fitting (1) nach einem der vorangehenden Ansprüche, **dadurch gekennzeichnet, dass** er ferner eine hülsenförmige Kappe (12) aufweist, die den Verbindungsabschnitt (4) in einem vorbestimmten Abstand umgibt, wobei das Rohrleitungsende (2) zwischen den Verbindungsabschnitt (4) und die hülsenförmige Kappe (12) einschiebbar ist.

22. Fitting (1) nach Anspruch 21, **dadurch gekennzeichnet, dass** die hülsenförmige Kappe (12) innenseitig ein Schneidelement (13) aufweist, das das Rohrleitungsende (2) im auf- bzw. eingeschobenen Zustand gegen Herausziehen in axialer Richtung sichert.

23. Fitting (1) nach einem der vorangehenden Ansprüche, **dadurch gekennzeichnet, dass** die Schutzhülse (7) durch Verschieben des Rohrleitungsendes (2) in die erste Position und/oder in die zweite Position bringbar ist.

24. Verbindungsanordnung (13), insbesondere für den Installationsbereich,
- mit einem Fitting (1) und
- mit einem mit dem Fitting (1) verbundenen Ende (2) einer von einem Medium durchströmbaren Rohrleitung (3),
**dadurch gekennzeichnet, dass** der Fitting (1) nach einem der vorangehenden Ansprüche ausgebildet ist.

25. Verfahren zur Herstellung einer Verbindungsanordnung (13), insbesondere für den Installationsbereich,
- wobei ein Fitting (1) mit einem Verbindungsabschnitt (4) bereitgestellt wird, der eine umfänglich verlaufende Nut (5) aufweist, und
- wobei ein Dichtelement (6) in der Nut (5) angeordnet wird,
- wobei eine Schutzhülse (7) in einer ersten Position am Verbindungsabschnitt (4) angeordnet wird, die die Nut (5) zumindest teilweise abdeckt, und ein Ende (2) einer Rohrleitung (3) auf bzw. in den Verbindungsabschnitt (4) geschoben wird, wobei die Schutzhülse (7) in axialer Richtung in eine zweite Position verschoben wird, in der die Nut (5) zumindest teilweise freigegeben wird,
**dadurch gekennzeichnet, dass** bei der fertigen Verbindungsanordnung (13) eine Verklemmung der Rohrleitung (3) im Fitting (1) hervorgerufen wird, indem das Rohrleitungsende (2) mit einer Anschlagfläche eines Anschlags (8) der Schutzhülse (7) zusammenwirkt, die einen zumindest abschnittsweise konischen Verlauf hat.

26. Verfahren zur Herstellung einer Verbindungsanordnung (13), insbesondere für den Installationsbereich,
- wobei ein Fitting (1) mit einem Verbindungsabschnitt (4) bereitgestellt wird, der eine umfänglich verlaufende Nut (5) aufweist, und
- wobei ein Dichtelement (6) in der Nut (5) angeordnet wird,
- wobei eine Schutzhülse (7) in einer ersten Position am Verbindungsabschnitt (4) angeordnet wird, die die Nut (5) zumindest teilweise abdeckt, und ein Ende (2) einer Rohrleitung (3) auf bzw. in den Verbindungsabschnitt (4) geschoben wird, wobei die Schutzhülse (7) in axialer Richtung in eine zweite Position verschoben wird, in der die Nut (5) zumindest teilweise freigegeben wird,
**dadurch gekennzeichnet, dass** bei der fertigen Verbindungsanordnung (13) eine Verklemmung der Rohrleitung (3) im Fitting (1) hervorgerufen wird, indem das Rohrleitungsende (2) mit einer Anschlagfläche eines Anschlags (8) der Schutzhülse (7) zusammenwirkt, die einen im Querschnitt gebogenen Verlauf hat.

27. Verfahren nach Anspruch 25 oder 26, **dadurch gekennzeichnet, dass** das Dichtelement (6) in der ersten Position von der Schutzhülse (7) abgedeckt wird und in der zweiten Position von der Schutzhülse (7) so weit freigeben wird, dass sich das Dichtelement (6) entspannt und mit dem Rohrleitungsende (2) in abdichtenden Kontakt kommt.

28. Verfahren nach Anspruch 25 bis 27, **dadurch gekennzeichnet, dass** die Schutzhülse (7) durch Verschieben des Rohrleitungsendes (2) in die erste Position und/oder in die zweite Position gebracht wird.

## Claims

1. A fitting (1), in particular for plumbing, for connection to an end (2) of a pipe (3) through which a medium can flow, comprising a connecting portion (4) provided with a circumferential groove (5) in which a sealing element (6) is arranged,
wherein a protective sleeve (7) is provided axially slidable between a first position and a second position, said sleeve covering at least partially the groove (5) in its first position and uncovering at least partially the groove (5) in its second position, wherein a limit stop (8) having a stop surface is formed on the protective sleeve (7), said limit stop cooperating with the pipe end (2) in such a way that a movement of the pipe end (2) relative to the connecting portion (4) can be transferred to the protective sleeve (7), said limit stop (8) being formed by a radial flare or contraction of an end of the protective sleeve (7), respectively,
**characterized in that** the stop surface of the limit stop (8) of the protective sleeve (7) cooperating with the pipe end (2) extends conically at least in portions thereof.

2. A fitting (1), in particular for plumbing, for connection to an end (2) of a pipe (3) through which a medium can flow, comprising a connecting portion (4) provided with a circumferential groove (5) in which a sealing element (6) is arranged,
wherein a protective sleeve (7) is provided axially slidable between a first position and a second position, said sleeve covering the groove (5) at least partially in its first position and uncovering the groove (5) at least partially in its second position, wherein a limit stop (8) having a stop surface is formed on the protective sleeve (7), said limit stop cooperating with the pipe end (2) in such a way that a movement of the pipe end (2) relative to the connecting portion (4) can be transferred to the protective sleeve (7), said limit stop (8) being formed by a radial flare or contraction of an end of the protective sleeve (7), respectively,
**characterized in that** the stop surface of the limit stop (8) of the protective sleeve (7) cooperating with the pipe end (2) extends in a curved cross section.

3. The fitting (1) according to claim 1 or 2, **characterized in that** the sealing element (6) is completely covered in the first position.

4. The fitting (1) according to one of the preceding claims, **characterized in that** the groove (5) is completely covered in the first position.

5. The fitting (1) according to one of the preceding claims, **characterized in that** the sealing element (6) is completely uncovered in the second position.

6. The fitting (1) according to one of the preceding claims, **characterized in that** the groove (5) is completely uncovered in the second position.

7. The fitting (1) according to one of the preceding claims, **characterized in that** the sealing element (6) is a sealing ring, in particular an O-ring.

8. The fitting (1) according to one of the preceding claims, **characterized in that** the limit stop (8) is formed integrally with the protective sleeve (7).

9. The fitting (1) according to one of the preceding claims, **characterized in that** the protective sleeve (7) is slidable between the first position and the second position by means of a translational movement.

10. The fitting (1) according to claim 9, **characterized in that** the protective sleeve (7) is slidable between the first position and the second position by means of a rotational movement.

11. The fitting (1) according to one of the preceding claims, **characterized in that** a securing means is provided securing the protective sleeve (7) against unintentional sliding.

12. The fitting (1) according to claim 11, **characterized in that** the protective sleeve (7) is arranged at the connecting portion (4) under stress, in particular in a shrunk-on fit.

13. The fitting (1) according to claim 11 or 12, **characterized in that** the protective sleeve (7) is secured by means of a high frictional resistance between the protective sleeve (7) and the connecting portion (4).

14. The fitting (1) according to one of claims 11 to 13, **characterized in that** the surface of the protective sleeve (7) and/or of the connecting portion (4) is at least partly roughened or provided with an axial stop, preferably at its end facing the pipe end (2).

15. The fitting (1) according to one of the preceding claims, **characterized in that** the sealing element (6) can be compressed in a radial direction by means of the protective sleeve (7) in its first position.

16. The fitting (1) according to one of the preceding claims, **characterized in that** the sealing element (6) can be compressed by sliding the protective sleeve (7) to its first position and/or to its second position.

17. The fitting (1) according to claim 16, **characterized in that** the protective sleeve (7) comprises a portion (9) which is arranged adjacent to the sealing element (6) in a radial direction in its first position and which is formed in such a way that the sealing element (6) is compressed less than in another position.

18. The fitting (1) according to claim 17, **characterized in that** the portion (9) is flexible.

19. The fitting (1) according to claim 17 or 18, **characterized in that** the portion (9) comprises one or multiple slots (10).

20. The fitting (1) according to claim 17 to 19, **characterized in that** the portion (9) comprises a cross-sectional expansion (11) or contraction which in particular has a conical shape.

21. The fitting (1) according to one of the preceding claims, **characterized in that** it furthermore comprises a sleeve-shaped cap (12) surrounding the connecting portion (4) at a predetermined distance, the pipe end (2) being insertable between the connecting portion (4) and the sleeve-shaped cap (12).

22. The fitting (1) according claim 21, **characterized in that** the sleeve-shaped cap (12) comprises a cutting element (13) on the inside securing the pipe end (2) against being pulled out in axial direction in its pushed-on or inserted condition.

23. The fitting (1) according to one of the preceding claims, **characterized in that** the protective sleeve (7) can be moved in its first position and/or in its second position by sliding the pipe end (2).

24. A connecting assembly (13), in particular for plumbing,
- having a fitting (1) and
- having an end (2) of a pipe (3) through which a medium can flow connected to the fitting (1),
**characterized in that** the fitting (1) is formed according to one of the preceding claims.

25. A method for producing a connecting assembly (13), in particular for plumbing,
- wherein a fitting (1) is provided having a connecting portion (4) comprising a circumferential groove (5), and
- wherein a sealing element (6) is arranged in the groove (5),
- wherein a protective sleeve (7) is arranged in a first position on the connecting portion (4), said sleeve covering the groove (5) at least partially, and an end (2) of a pipe (3) is pushed on or inserted into the connecting portion (4), respectively, wherein the protective sleeve (7) is axially slid into a second position in which the groove (5) is uncovered at least partially,
**characterized in that** in the completed connecting assembly (13) a jamming of the pipe (3) in the fitting (1) is caused by cooperation of the pipe end (2) with a stop surface of a limit stop (8) of the protective sleeve (7) which extends conically at least in portions thereof.

26. A method for producing a connecting assembly (13), in particular for plumbing,
- wherein a fitting (1) is provided having a connecting portion (4) comprising a circumferential groove (5), and
- wherein a sealing element (6) is arranged in the groove (5),
- wherein a protective sleeve (7) is arranged in a first position on the connecting portion (4), said sleeve covering the groove (5) at least partially, and an end (2) of a pipe (3) is pushed on or inserted into the connecting portion (4), respectively, wherein the protective sleeve (7) is axially slid into a second position in which the groove (5) is uncovered at least partially,
**characterized in that** in the completed connecting assembly (13) a jamming of the pipe (3) in the fitting (1) is caused by cooperation of the pipe end (2) with a stop surface of a limit stop (8) of the protective sleeve (7) which extends in a curved cross section.

27. The method according to claim 25 or 26, **characterized in that** the sealing element (6) is covered by the protective sleeve (7) in its first position and is uncovered by the protective sleeve (7) in its second position to such an extent that the sealing element (6) expands and comes into a sealing contact with the pipe end (2).

28. The method according to claim 25 to 27, **characterized in that** the protective sleeve (7) is brought into the first position and/or the second position by sliding the pipe end (2).

## Revendications

1. Raccord (1), en particulier pour le secteur de l'installation, pour la connexion à une extrémité (2) d'une canalisation (3) traversée par un fluide, à une section de connexion (4) qui présente une rainure périphérique (5), dans laquelle est disposé un élément d'étanchéité (6),
une douille de protection (7) coulissante dans le sens axial entre une première position et une seconde position étant prévue, qui recouvre au moins partiellement dans la première position la rainure (5) et libère au moins partiellement dans la seconde position la rainure (5), une butée (8) réalisée sur la douille de protection (7) étant prévue avec une surface de butée, la butée coopérant avec l'extrémité de canalisation (2) de sorte qu'un mouvement de l'extrémité de canalisation (2) par rapport à la section de connexion (4) peut être transmis à la douille de protection (7), la butée (8) étant formée par un élargissement respectivement un rétrécissement radial d'une extrémité de la douille de protection (7),
**caractérisé en ce que** la surface de butée de la butée (8), coopérant avec l'extrémité de canalisation (2) présente une courbe conique au moins par section.

2. Raccord (1), en particulier pour le secteur de l'installation, pour la connexion à une extrémité (2) d'une canalisation (3) traversée par un fluide, à une section de connexion (4) qui présente une rainure périphérique (5), dans laquelle est disposé un élément d'étanchéité (6), une douille de protection (7) coulissante dans le sens axial entre une première position et une seconde position étant prévue, qui recouvre au moins partiellement dans la première position la rainure (5) et libère au moins partiellement dans la seconde position la rainure (5), une butée (8) réalisée sur la douille de protection (7) étant prévue avec une surface de butée, la butée coopérant avec une extrémité de canalisation (2) de sorte qu'un mouvement de l'extrémité de canalisation (2) par rapport à la section de connexion (4) peut être transmis à la douille de protection (7), la butée (8) étant formée par un élargissement respectivement un rétrécissement radial d'une extrémité de la douille de protection (7), **caractérisé en ce que** la surface de butée de la butée (8) coopérant avec l'extrémité de canalisation (2), de la douille de protection (7) présente une section transversale courbée.

3. Raccord (1) selon la revendication 1 ou 2, **caractérisé en ce que** dans la première position, l'élément d'étanchéité (6) est complètement recouvert.

4. Raccord (1) selon l'une des revendications précédentes, **caractérisé en ce que** dans la première position, la rainure (5) est complètement recouverte.

5. Raccord (1) selon l'une des revendications précédentes, **caractérisé en ce que** dans la seconde position, l'élément d'étanchéité (6) est complètement dégagé.

6. Raccord (1) selon l'une des revendications précédentes, **caractérisé en ce que** dans la seconde position, la rainure (5) est complètement dégagée.

7. Raccord (1) selon l'une des revendications précédentes, **caractérisé en ce que** l'élément d'étanchéité (6) est une bague d'étanchéité, en particulier un joint torique.

8. Raccord (1) selon l'une des revendications précédentes, **caractérisé en ce que** la butée (8) est moulée sur la douille de protection (7).

9. Raccord (1) selon l'une des revendications précédentes, **caractérisé en ce que** la douille de protection (7) est coulissante entre la première position et la seconde position par un mouvement de translation.

10. Raccord (1) selon la revendication 9, **caractérisé en ce que** la douille de protection (7) est coulissante entre la première position et la seconde position par un mouvement de rotation.

11. Raccord (1) selon l'une des revendications précédentes, **caractérisé en ce qu'**il est prévu un blocage de la douille de protection (7) pour empêcher un déplacement involontaire.

12. Raccord (1) selon la revendication 11, **caractérisé en ce que** la douille de protection (7) est disposée sous tension sur la section de connexion (4), en particulier ajustée par contraction.

13. Raccord (1) selon la revendication 11 ou 12, **caractérisé en ce que** la douille de protection (7) est bloquée par une résistance accrue à la friction entre la douille de protection (7) et la section de connexion (4).

14. Raccord (1) selon l'une des revendications 11 à 13, **caractérisé en ce que** la surface de la douille de protection (7) et/ou de la section de connexion (4) est, au moins par section, rugosifiée ou munie d'une butée axiale de préférence sur l'extrémité tournée vers l'extrémité de canalisation (2).

15. Raccord (1) selon l'une des revendications précédentes, **caractérisé en ce que** l'élément d'étanchéité (6) peut être comprimé dans le sens radial à travers la douille de protection (7) dans la première position.

16. Raccord (1) selon l'une des revendications précédentes, **caractérisé en ce que** l'élément d'étanchéité (6) peut être comprimé par déplacement de la douille de protection (7) dans la première position et/ou dans la seconde position.

17. Raccord (1) selon la revendication 16, **caractérisé en ce que** la douille de protection (7) présente une section (9) qui est disposée dans la première position dans le sens radial à côté de l'élément d'étanchéité (6) et est réalisée de sorte que l'élément d'étanchéité (6) est moins comprimé que dans une autre position.

18. Raccord (1) selon la revendication 17, **caractérisé en ce que** la section (9) est flexible.

19. Raccord (1) selon la revendication 17 ou 18, **caractérisé en ce que** la section (9) présente une ou plusieurs fentes (10).

20. Raccord (1) selon l'une des revendications 17 à 19, **caractérisé en ce que** la section (9) présente un élargissement (11) respectivement un rétrécissement de la section transversale, qui a en particulier une forme conique.

21. Raccord (1) selon les revendications précédentes, **caractérisé en ce qu'**il présente en outre un chapeau en forme de manchon (12) qui entoure la section de connexion (4) à une distance prédéterminée, l'extrémité de canalisation (2) pouvant être insérée entre la section de connexion (4) et le chapeau en forme de manchon (12).

22. Raccord (1) selon la revendication 21, **caractérisé en ce que** le chapeau en forme de manchon (12) présente sur la face interne un élément de coupe (13) qui fixe l'extrémité de canalisation (2) à l'état inséré afin d'éviter une extraction dans le sens axial.

23. Raccord (1) selon l'une des revendications précédentes, **caractérisé en ce que** le manchon de protection (7) peut être amené par déplacement de l'extrémité de canalisation (2) dans la première position et/ou dans la seconde position.

24. Dispositif de connexion (13), en particulier pour le secteur de l'installation, comprenant
- un raccord (1) et
- une extrémité (2), reliée au raccord (1), d'une canalisation (3) traversée par un fluide,
**caractérisé en ce que** le raccord (1) est réalisé selon l'une des revendications précédentes.

25. Procédé pour la fabrication d'un dispositif de connexion (13), en particulier pour le secteur de l'installation,
- un raccord (1) étant préparé avec une section de connexion (4) qui présente une rainure (5) circulaire périphérique, et
- un élément d'étanchéité (6) étant disposé dans la rainure (5),
- un manchon de protection (7) étant disposé dans une première position sur la section de connexion (4), qui recouvre au moins partiellement la rainure (5), et une extrémité (2) d'une canalisation (3) étant coiffée sur respectivement enfilée dans la section de connexion (4), le manchon de protection (7) étant placé dans la direction axiale dans une seconde position, dans laquelle la rainure (5) est libérée au moins partiellement,
**caractérisé en ce que** dans le cas d'un dispositif de connexion fini (13), il est provoqué un calage de la canalisation (3) dans le raccord (1) dans le fait que l'extrémité de canalisation (2) coopère avec une surface d'une butée (8) de la douille de protection (7) qui a une courbe conique au moins par section.

26. Procédé pour la fabrication d'un dispositif de connexion (13), en particulier pour le secteur de l'installation,
- un raccord (1) étant préparé avec une section de connexion (4) qui présente une rainure (5) circulaire périphérique, et
- un élément d'étanchéité (6) étant disposé dans la rainure (5),
- une douille de protection (7) étant disposée dans une première position sur la section de connexion (4), qui recouvre au moins partiellement la rainure (5), et une extrémité (2) d'une canalisation (3) étant coiffée sur respectivement enfilée dans la section de connexion (4), douille de protection (7) étant placée dans la direction axiale dans une seconde position, dans laquelle est libérée au moins partiellement la rainure (5),
**caractérisé en ce que** dans le cas d'un dispositif de connexion (3), il est provoqué un calage de la canalisation (3) dans le raccord (1) dans le fait que l'extrémité de canalisation (2) coopère avec une surface d'une butée (8) de la douille de protection (7) qui a une courbe arquée en section transversale.

27. Procédé selon la revendication 25 ou 26, **caractérisé en ce que** l'élément d'étanchéité (6) est recouvert dans la première position par la douille de protection (7), et est dégagé dans la seconde position par la douille de protection (7) dans la mesure où l'élément d'étanchéité (6) est desserré et entre en contact d'étanchéité avec l'extrémité de canalisation (2).

28. Procédé selon la revendication 25 à 27, **caractérisé en ce que** la douille de protection (7) est amenée à la première et/ou seconde position par déplacement de l'extrémité de canalisation (2).
